# FASCICULE DE BREVET EUROPEEN

(11) **EP 2 830 936 B1**
(45) Date de publication et mention de la délivrance du brevet: **11.11.2020**
(21) Numéro de dépôt: 13719720.8
(22) Date de dépôt: 28.03.2013
(51) Int. Cl.: B64C 1/18

(54) **PANNEAU MONOBLOC DE PLANCHER POUR VÉHICULE DE TRANSPORT, PLANCHER ET VÉHICULE DE TRANSPORT COMPRENANT UN TEL PANNEAU MONOBLOC**
UNITÄRE PLATTE FÜR DEN BODEN EINES FAHRZEUGES, BODEN UND FAHRZEUG MIT EINER SOLCHEN EINHEITLICHEN PLATTE
UNITARY PANEL FOR THE FLOOR OF A VEHICLE, FLOOR, AND VEHICLE INCLUDING SUCH A UNITARY PANEL

(30) Priorité: 30.03.2012 FR 1200968
(43) Date de publication de la demande: 04.02.2015
(73) Titulaire: Sogeclair S.A., 31700 Blagnac (FR)
(72) Inventeur: DELOUBES, Mathieu, F-31530 Bretx (FR)
(74) Mandataire: Junca, Eric
(86) Numéro de dépôt international: PCT/EP2013/000941
(87) Numéro de publication internationale: WO 2013/143701

(56) Documents cités:
- EP-A1- 0 644 096
- WO-A1-2006/102090
- FR-A1- 2 939 404
- US-A1- 2005 224 648
- US-A1- 2008 098 682

## Description

### DOMAINE TECHNIQUE

L'invention concerne un panneau monobloc de plancher pour véhicule de transport - notamment pour aéronef -, un plancher pour véhicule de transport comprenant un tel panneau monobloc, un véhicule de transport - notamment un aéronef - comprenant un tel panneau monobloc et un procédé de fabrication d'un plancher de véhicule de transport dans lequel on utilise un tel panneau monobloc.

Un véhicule de transport comporte au moins une cabine dans laquelle sont alignées par exemple plusieurs rangées de sièges pour passagers. Les sièges pour passagers sont fixés au plancher de la cabine du véhicule de transport par l'intermédiaire d'une pluralité de rails. En particulier, les sièges sont fixés aux rails qui s'étendent le plus souvent parallèlement à l'axe longitudinal du véhicule de transport.

En particulier, dans un aéronef, les rails reposent sur des traverses constitutives de l'ossature structurelle (structure primaire) de l'aéronef et s'étendant sensiblement parallèlement les unes aux autres et transversalement à l'axe longitudinal de l'aéronef. Ainsi, les rails du plancher, qui s'étendent parallèlement à l'axe longitudinal de l'aéronef, sont montés fixes sur des éléments constitutifs de l'ossature structurelle de l'aéronef. En particulier, les rails servent à la fixation des éléments d'aménagement de la cabine, tels que, par exemple, des sièges, des offices ("galleys"), des meubles et/ou d'équipements, fret, palette, container embarqués.

### ETAT DE LA TECNIQUE

On connait, à titre d'illustration générale de l'état de la technique, une cabine d'aéronef comportant une pluralité de rails s'étendant longitudinalement dans la cabine aéronef, ces rails étant fixés sur les poutres transversales de l'ossature structurelle de l'aéronef. Chaque rail forme une glissière longitudinale adaptée pour recevoir au moins un élément de fixation d'un siège et comporte en outre deux brides latérales planes adaptées pour recevoir des panneaux de plancher. Les panneaux de plancher comprenant une structure en nid d'abeille sont fixés, en général au moyen de boulons, sur les brides latérales planes de chaque rail.

Le document US 2005/0224648 A1 qui décrit un panneau de plancher d'aéronef comprenant un noyau composite et un support de charge utile couplé à la surface inférieure, le support de charge comprenant un élément de poutre sensiblement fermé (ou "caisson") est considéré comme le document de l'art antérieur le plus proche.

On connait aussi de FR 2 891 239 un plancher pour aéronef formé d'une pluralité de panneaux, chacun des panneaux étant fixés sur au moins une traverse de l'ossature structurelle de l'aéronef au moyen de boulons s'étendant au travers du panneau et d'une semelle supérieure de la traverse. Les panneaux décrits dans FR 2 891 239 présentent un rail de montage des sièges ayant un axe longitudinal, ce rail étant inséré dans l'épaisseur de chaque panneau.

Un tel panneau de plancher d'aéronef décrit dans FR 2 891 239 ne présente pas une résistance mécanique suffisante pour permettre le transport sécurisé des passagers ou du fret dans la cabine de l'aéronef.

Une telle solution, qui inclut au moins un rail longitudinal de fixation de sièges formé de titane ou d'alliage d'aluminium ne permet pas de réduire le poids du plancher de l'aéronef, notamment par rapport au poids d'un plancher d'aéronef formé par la superposition de poutres transversales, de rails longitudinaux et de panneau interposés entre les rails longitudinaux.

### EXPOSE DE L'INVENTION

L'invention vise à pallier l'ensemble des inconvénients précédemment évoqués. En particulier, l'invention vise un panneau monobloc de plancher pour véhicule de transport qui en même temps présente une rigidité mécanique au moins maintenue et un poids réduit par rapport à un panneau de plancher de l'état de la technique.

L'invention vise un tel panneau monobloc de plancher pour véhicule de transport qui ne nécessite pas la pose préalable d'une pluralité de rails longitudinaux dans le véhicule de transport destinés à recevoir le(s) panneau(x) monobloc de plancher.

L'invention vise un tel panneau monobloc de plancher pour véhicule de transport qui soit simple à poser dans un véhicule de transport et qui ne nécessite pas d'insérer ledit panneau monobloc dans l'intervalle séparant deux rails parallèles adjacents ni d'adapter les dimensions dudit panneau monobloc à la dimension de cet intervalle.

En particulier, l'invention vise un tel panneau monobloc de plancher pour véhicule de transport qui est de dimension standard et qui ne nécessite pas d'être adapté à la dimension de l'intervalle séparant deux rails parallèles contigus d'un plancher de véhicule de transport.

L'invention vise donc un tel panneau monobloc de plancher pour véhicule de transport qui permette une plus grande modularité et un nombre accru de variantes dans l'aménagement de la cabine du véhicule de transport.

L'invention vise aussi un tel panneau monobloc de plancher pour véhicule de transport qui satisfait aux exigences de résistance mécanique, de résistance au feu, de réduction des émissions de fumée en cas d'incendie préconisées notamment dans le domaine aéronautique.

L'invention vise un tel panneau monobloc de plancher pour véhicule de transport adapté pour permettre une installation facilitée dans la cabine dudit véhicule de transport.

L'invention vise aussi un tel panneau monobloc de plancher pour véhicule de transport adapté pour permettre une maintenance facilitée.

L'invention vise également à atteindre tous ces objectifs à moindre coût, en proposant un panneau monobloc de plancher pour véhicule de transport de coût de revient optimisé.

L'invention vise également en plus particulièrement à proposer un tel panneau monobloc de plancher pour véhicule de transport qui soit compatible avec les contraintes de sécurité - notamment de résistance au feu et de génération de fumée - et de résistance aux contraintes mécanique préconisées en particulier dans le secteur de la construction et des équipements aéronautiques.

L'invention vise aussi un tel panneau monobloc présentant des propriétés mécaniques compatibles avec une utilisation dans un véhicule de transport.

L'invention vise de surcroît à proposer un tel panneau monobloc de plancher pour véhicule de transport qui préserve les habitudes de travail des personnels, qui permette un montage et un démontage du plancher d'un véhicule de transport qui soit facilité, et qui n'implique pour sa mise en oeuvre que peu de manipulations.

Pour ce faire, l'invention concerne un ensemble selon la revendication 1 comprenant un panneau monobloc de plancher pour véhicule de transport comprenant un plateau, dit plateau autoportant, présentant une plus petite dimension, dite épaisseur, s'étendant selon une première direction du plateau autoportant et deux plus grandes dimensions s'étendant selon deux directions principales orthogonales entre elles et orthogonales à la première direction ; le plateau autoportant présentant deux faces, dites faces principales, opposées et s'étendant sensiblement parallèlement aux deux directions principales ; **le panneaux comprenant** au moins une poutre solidaire du plateau autoportant et présentant un axe d'allongement parallèle à au moins une première face principale du plateau autoportant, chaque poutre étant adaptée pour augmenter la résistance en flexion du panneau monobloc selon l'axe d'allongement de la poutre **et présentant au moins une extrémité formant un évidemment pour loger un organe bi-fonctionnel de solidarisation avec un élément d'ossature structurelle du véhicule de transport.**

L'invention concerne également l'utilisation d'un tel ensemble à titre d'élément de plancher pour véhicule de transport, notamment d'aéronef, selon la revendication 8, un procédé de fabrication d'un plancher de véhicule de transport selon la revendication 9 et un plancher de véhicule de transport selon la revendication 12.

Certaines alternatives décrites ci-dessous ne sont pas revendiquées et ne font donc pas partie de l'invention.

Dans toute la description :
- le terme "autoportant" qualifie un plateau qui présente une rigidité en flexion suffisante et adaptée notamment pour pouvoir supporter son propre poids sans déformation, en particulier lorsque ledit plateau autoportant est en appui sur deux traverses sensiblement parallèles l'une à l'autre ;
- le terme "monobloc" qualifie un panneau de plancher qui est formé d'une seule pièce, c'est-à-dire qui ne peut pas être séparé en une pluralité d'éléments distincts et séparés sans rompre ni dégrader ledit panneau monobloc. En particulier, un tel panneau monobloc n'est pas démontable en une pluralité d'éléments séparables les uns des autres ;
- les termes "inférieur" et "supérieur" s'entendent vis-à-vis d'un panneau monobloc selon l'invention tel que positionné et remplissant son rôle dans un véhicule de transport, la face principale supérieure dudit panneau monobloc étant orientée vers le haut, et la face principale inférieure étant orientée vers le bas. Ainsi, un panneau monobloc selon l'invention stocké en vue de son installation ultérieure pour former un plancher de véhicule de transport ou suite à son démontage à partir d'un plancher de véhicule de transport présente une face principale inférieure sur laquelle débouche ou s'étend au moins une poutre et une face principale supérieure ne présentant pas une telle poutre et adaptée pour permettre la circulation d'usagers du véhicule de transport ;
- les expressions "ossature structurelle" ou "structure primaire" d'un véhicule de transport - notamment d'un véhicule de transport par voie fluviale ou par voie maritime (par exemple un ferry, un paquebot ou un cargo), d'un véhicule de transport par voie de chemin de fer, d'un véhicule de transport par voie routière - ou d'un aéronef désignent les structures d'un véhicule de transport qui lui confèrent sa rigidité, sa tenue et sa forme.

L'invention consiste donc à proposer un panneau monobloc de plancher d'un véhicule de transport adapté pour pouvoir diminuer le poids du plancher tout en conservant des propriétés de résistance mécanique, notamment adaptées pour permettre l'utilisation d'un tel panneau monobloc pour former un plancher pour véhicule de transport.

Avantageusement, le plateau autoportant est formé d'un matériau, dit matériau d'âme, adapté pour présenter une résistance -en particulier sans déformation sensible en compression qui est suffisante pour permettre la mise en place de meubles en appui sur au moins un panneau monobloc du plancher pour véhicule de transport.

Avantageusement, la combinaison du plateau autoportant et de la(des) poutre(s) permet de former un panneau monobloc présentant en même temps une résistance à l'impact et un module d'élasticité en flexion qui sont élevés et adaptés pour permettre une utilisation comme plancher pour véhicule de transport.

En outre, un tel panneau monobloc de résistance mécanique (résistance à l'impact et élasticité en flexion) améliorée présente néanmoins un encombrement - notamment une épaisseur - faible et en tout état de cause compatible avec les contraintes d'encombrement rencontrées dans une cabine d'aéronef. En particulier, un tel panneau monobloc permet l'utilisation d'un plateau autoportant de faible épaisseur.

En particulier, un tel panneau monobloc de plancher est adapté pour pouvoir remédier à l'utilisation de rails de guidage de siège de l'état de la technique.

En particulier, un tel panneau monobloc de plancher est adapté pour pouvoir être monté sur au moins un élément de l'ossature structurelle d'un aéronef sans nécessiter l'utilisation de rails de fixation de sièges et/ou de meubles.

Avantageusement, une pluralité de panneaux monobloc selon l'invention permet la réalisation d'un plancher pour véhicule de transport qui est plan, tout en utilisant des panneaux monobloc présentant des plateaux autoportants d'épaisseur variables et de résistance mécanique variables. Un panneau monobloc selon l'invention constitue un élément modulable de plancher pour véhicule de transport en ce qu'il permet une adaptation des propriétés mécaniques dudit panneau monobloc, sans modifier l'épaisseur du panneau monobloc. Un tel panneau monobloc permet un aménagement modulable du volume intérieur du véhicule de transport.

Avantageusement, un panneau monobloc de plancher pour véhicule de transport comprend un plateau autoportant présentant une longueur et une largeur formant les deux plus grandes dimensions.

Avantageusement, le plateau autoportant comprend une peau, dite peau de cabine, s'étendant en surface et solidaire d'une première face principale, dite face supérieure, du plateau autoportant - notamment adaptée pour pouvoir permettre la circulation d'un utilisateur sur le plancher dudit véhicule de transport - et des moyens d'assemblage - notamment par collage - de la peau de cabine et du plateau autoportant.

Avantageusement, le plateau autoportant comprend une peau, dite peau inférieure, s'étendant en surface et solidaire d'une deuxième face principale, dite face inférieure, du plateau autoportant et des moyens d'assemblage - notamment par collage - de la peau inférieure et du plateau autoportant.

Avantageusement, dans un panneau monobloc, la peau de cabine et/ou la peau inférieure est (sont) formées d'un matériau rigide. En particulier, le matériau rigide formant la peau de cabine est adapté pour permettre la circulation d'un utilisateur sur le plancher dudit véhicule de transport.

Avantageusement, dans un panneau monobloc, la peau de cabine est formée d'un matériau choisi dans le groupe formé des matériaux métalliques (par exemple d'aluminium ou d'acier), des matériaux composites comprenant une charge - notamment une nappe unidirectionnelle ou un tissu - choisie dans le groupe formé des charges de carbone, des charges de verre, des charges d'aramide (polyamides aromatiques), des charges en fibres naturelles - notamment fibres de bambou - et d'une résine choisie dans le groupe formé des résines thermoplastiques, par exemple des résines du type polyéther imide (PEI), des résines du type polyéther imide ultra dense, des résines du type polypropylène sulfone (PPS), des résines du type polyétheréthercétone (PEEK) et des résines thermodurcissable, par exemple des résines époxy et des résines phénoliques. En particulier, une telle peau de cabine confère une bonne résistance mécanique et un poids réduit.

Avantageusement, la peau de cabine et la peau inférieure sont formées du même matériau.

Avantageusement, la peau de cabine est une peau rigide en elle-même (plaque), et est adaptée pour pouvoir subir une déformation élastique - notamment en flexion - acceptable. La peau de cabine peut cependant présenter en elle-même une certaine souplesse, notamment en déformation élastique en flexion dans la grande dimension de la peau. Dans ce cas, l'assemblage de la peau de cabine et du plateau autoportant confère sa rigidité au panneau monobloc de plancher.

Avantageusement, le plateau autoportant comprend au moins un matériau d'âme choisi dans le groupe formé d'une âme en nid d'abeille, d'une mousse, d'un treillis, d'une âme tissée et d'une âme non tissée.

Avantageusement, le plateau autoportant est une âme en matériau thermoplastique transparent, notamment en polyméthacrylate de méthyle (PMMA), connu sous la dénomination Plexiglas®.

Avantageusement, le plateau autoportant peut être formé d'une âme en nid d'abeille. Avantageusement, l'âme en nid d'abeille peut être formée de tout matériau rigide approprié, notamment d'un matériau choisi dans le groupe formé de l'aluminium, des alliages de l'aluminium, du poly-para-phénylène téréphtalamide (connu notamment sous la dénomination Kevlar®), d'une matière thermoplastique - notamment le polypropylène partiellement réticulé ou non - le PVC, le polycarbonate. Avantageusement, le matériau constituant l'âme en nid d'abeille peut être un matériau ayant subi un traitement de surface, de façon à le rendre imperméable aux gaz et/ou aux liquides.

Avantageusement, l'âme en nid d'abeille peut être constituée d'un assemblage de matériaux. Avantageusement, l'âme en nid d'abeille peut être formée d'une structure rigide, aussi appelée squelette, périphérique et d'alvéoles (ou corps creux, cavités ou pores). Dans ce mode particulier de réalisation, les alvéoles ouvertes forment un écarteur empêchant la déformation de la peau de cabine sous le poids des passagers ou des meubles.

Avantageusement, l'âme en nid d'abeille est constituée d'un matériau présentant des cavités ou pores traversant l'épaisseur de l'âme en nid d'abeille et débouchant sur les deux faces principales de l'âme en nid d'abeille.

Avantageusement, le plateau autoportant peut être constitué d'une mousse solide choisie dans le groupe formé des mousses à pores ouverts et des mousses à pores fermés. Avantageusement, on choisit la mousse solide dans le groupe formé des mousses de polyuréthane, des mousses d'aluminium, des mousses de carbone, des mousses thermodurcissables, des mousses thermoplastiques et des mousses de balsa.

Avantageusement, le plateau autoportant est choisi dans le groupe formé des âmes rigides en nid d'abeille, des âmes rigides en mousse rigide et des âmes rigides constituées d'une pluralité d'éléments en mousse rigide.

Avantageusement, le plateau autoportant peut être constitué d'une pluralité d'éléments en mousse rigide, lesdits éléments en mousse rigide étant collés les uns aux autres de façon à former le plateau autoportant du panneau monobloc de plancher. Avantageusement, chacun des éléments en mousse rigide étant de forme allongée et présentant en section droite transversale en forme de trapèze, lesdits éléments en mousse rigide sont associés les uns aux autres de façon à former le plateau autoportant.

Avantageusement, la poutre est constituée d'un matériau solide choisi dans le groupe formé des matériaux métalliques, des matériaux thermodurcissables et des matériaux thermoplastiques. En particulier, la poutre est constituée d'un matériau solide thermodurcissable comprenant une résine époxyde résistante au feu et ne générant pas de fumée lors de sa combustion éventuelle.

Avantageusement, le plateau autoportant et la poutre sont associés l'un avec l'autre par tout moyen connu en lui-même de l'homme du métier, notamment par brasage ou par collage entre le plateau autoportant et la poutre. Il est aussi possible que le plateau autoportant et la poutre soient associés l'un à l'autre par collage entre une peau, dite peau inférieure, s'étendant en surface inférieure du plateau autoportant - notamment de l'âme en nid d'abeille - et la poutre.

Avantageusement, le panneau monobloc comprend, remplissant au moins partiellement au moins une alvéole de l'âme en nid d'abeille, une quantité d'un matériau de renfort choisi dans le groupe formé des résines thermodurcissables - notamment des résines époxydes, des résines phénoliques et des mousses -. En particulier, un tel panneau monobloc comprend un tel matériau de renfort remplissant les alvéoles de l'âme en nid d'abeille s'étendant en regard d'au moins un tronçon de poutre dudit panneau monobloc, ladite quantité de matériau thermodurcissable étant adaptée pour permettre un renforcement de la résistance mécanique du panneau monobloc de plancher.

Avantageusement et selon l'invention, chaque poutre s'étend en saillie et au contact de l'une seule des deux faces principales du plateau autoportant - notamment de l'âme en nid d'abeille -.

Dans un panneau monobloc, la (les) poutre(s) s'étend(ent) en saillie, à partir de la surface et au contact de l'une des deux faces principales du plateau autoportant - notamment de l'âme en nid d'abeille -. Cependant, il est aussi possible que la(les) poutre(s) s'étend(ent) insérée(s) au moins partiellement dans l'épaisseur du plateau autoportant - notamment de l'âme en nid d'abeille - du panneau monobloc. Avantageusement, la(les) poutre(s) s'étend(ent) insérée(s) totalement dans l'épaisseur du plateau autoportant - notamment de l'âme en nid d'abeille - du panneau monobloc.

Avantageusement et selon l'invention, chaque poutre s'étend au contact d'une première face, dite face inférieure, principale opposée à une face supérieure du plateau autoportant - notamment de l'âme en nid d'abeille -.

Dans un panneau monobloc selon l'invention, les poutres s'étendent sur la face du plateau autoportant opposée à la face supérieure du plateau autoportant, ladite face supérieure du plateau autoportant - notamment de l'âme en nid d'abeille - étant plane et adaptée pour permettre la circulation d'un utilisateur sur le plancher dudit véhicule de transport. Dans un panneau monobloc selon l'invention, les poutres n'entravent pas la circulation des passagers, mais permettent une amélioration de la résistance en flexion du panneau monobloc.

Avantageusement et selon l'invention, chaque poutre présente au moins un tronçon creux et de section droite transversale de forme polygonale. Avantageusement, au moins l'une des poutres présente au moins un tronçon creux présentant en section droite transversale une forme polygonale. Avantageusement, chaque poutre présente au moins un tronçon creux et de section droite transversale trapézoïdale. Avantageusement, la section droite transversale de chaque tronçon creux de la (des) poutre(s) présente(nt) une section droite transversale trapézoïdale. On parle alors d'élément raidisseur en "oméga".

Avantageusement, la(les) poutre(s) peu(ven)t présenter en section droite transversale une forme complexe. En particulier, la(les) poutre(s) peu(ven)t présenter en section droite transversale des extensions latérales planes Dans cette configuration, chaque poutre présente une surface de contact avec le plateau autoportant dont l'aire est augmentée.

Avantageusement et selon l'invention, la poutre présente au moins un tronçon creux et présentant une section droite transversale de forme polygonale, ledit tronçon creux s'étendant à au moins l'une des extrémités longitudinales de ladite poutre.

Avantageusement et selon l'invention, la poutre est en forme de profilé. Avantageusement, la poutre présente une section droite transversale de forme et de dimensions identiques - notamment de forme polygonale, en particulier trapézoïdale - sur la totalité de sa longueur. Avantageusement, chaque tronçon creux de la poutre s'étend à chaque extrémité de la poutre et en périphérie du plateau autoportant.

Avantageusement la poutre est formée sur toute sa longueur d'un cylindre présentant une section droite transversale de forme trapézoïdale.

Avantageusement, la poutre est une poutre creuse ménageant un espace intérieur débouchant aux deux extrémités longitudinales de la poutre creuse.

Avantageusement, la poutre est formée par un élément de la pluralité d'éléments en mousse rigide constituants le plateau autoportant.

Avantageusement et selon l'invention, chaque tronçon creux présente en section droite transversale une forme trapézoïdale et présente une paroi, dite paroi adhérente, sensiblement plane et s'étendant en regard et en contact avec le plateau autoportant et une paroi, dite paroi libre, opposée à la paroi adhérente sensiblement plane et parallèle à la paroi adhérente.

Avantageusement et dans une première variante selon l'invention, chaque tronçon creux s'étendant en périphérie du plateau autoportant présente en section droite transversale une forme trapézoïdale et présente une paroi, dite paroi adhérente, sensiblement plane et s'étendant en regard et en contact avec le plateau autoportant - notamment en nid d'abeille - et une paroi, dite paroi libre, opposée à la paroi adhérente sensiblement plane et parallèle à la paroi adhérente.

Dans cette première variante selon l'invention, chaque poutre du panneau monobloc comprend à chacune de ses extrémités un tronçon creux présentant deux parois opposées sensiblement parallèles et ménageant une cavité d'appariement de deux panneaux monobloc adjacents et de solidarisation des panneaux monobloc avec un élément d'ossature structurelle du véhicule de transport.

Avantageusement et selon l'invention, chaque tronçon creux forme un logement adapté pour pouvoir recevoir et coopérer avec un organe bi-fonctionnel de solidarisation d'au moins un panneau de plancher avec un élément - notamment une traverse - de l'ossature structurelle du véhicule de transport. Un tel organe bi-fonctionnel de solidarisation s'étend sur une poutre unique contrairement aux rails de fixation de sièges de l'état de la technique qui s'étendent sur une pluralité de poutres adjacentes. Le montage d'un panneau monobloc selon l'invention au moyen d'un tel organe bi-fonctionnel de solidarisation est donc simplifié.

Avantageusement, il est possible, dans un plancher pour véhicule de transport formé de panneaux monobloc selon l'invention que certains de ces organes bifonctionnels de solidarisation soient adaptés pour permettre la solidarisation d'un seul panneau monobloc avec l'ossature structurelle du véhicule de transport, notamment la solidarisation de panneaux monobloc s'étendant en périphérie du plancher du véhicule de transport.

Avantageusement, la poutre comprend une face libre présentant en section droite transversale une forme choisie dans le groupe formé des formes concaves, des formes convexes et des formes planes.

Avantageusement et selon l'invention, chaque tronçon creux forme un logement adapté pour pouvoir recevoir et coopérer avec un organe bi-fonctionnel de solidarisation de deux panneaux monobloc adjacents l'un avec l'autre et de solidarisation des deux panneaux monobloc adjacents avec un élément - notamment avec une traverse d'un aéronef ou d'un bateau - d'ossature structurelle du véhicule de transport.

Avantageusement, dans un mode de réalisation particulier d'un panneau monobloc selon l'invention, chaque tronçon creux de section droite transversale de forme trapézoïdale présente une paroi libre au moins partiellement évidée. Dans ce mode de réalisation particulier, avantageusement et selon l'invention, chaque logement ménagé dans le tronçon creux et présentant une paroi opposée au moins partiellement évidée est adapté pour pouvoir recevoir au moins une partie d'un organe bi-fonctionnel de solidarisation de deux panneaux monobloc adjacents l'un avec l'autre et de solidarisation des deux panneaux monobloc adjacents avec l'élément d'ossature structurelle du véhicule de transport - notamment avec une traverse d'un aéronef -.

Avantageusement, un panneau monobloc selon l'invention comprend au moins un tronçon creux de section droite transversale de forme trapézoïdale présentant une paroi libre au moins partiellement évidée, ledit tronçon creux étant adapté pour pouvoir recevoir un organe bi-fonctionnel de solidarisation d'un panneau monobloc avec un élément d'ossature structurelle du véhicule de transport.

À noter que la mise en place d'un panneau monobloc selon l'invention sur les éléments transversaux de l'ossature structurelle du véhicule de transport est aisée et nécessite uniquement l'adaptation du logement ménagé dans le tronçon creux avec l'organe bi-fonctionnel et la fixation du panneau monobloc sur l'organe bi-fonctionnel et éventuellement la solidarisation de l'organe bi-fonctionnel avec l'élément d'ossature structurelle du véhicule de transport.

Avantageusement et selon l'invention, chaque poutre est creuse et présente un espace intérieur limité par la paroi adhérente et par la paroi libre.

Avantageusement et selon l'invention, le panneau monobloc présente une pluralité de mortaises traversant le plateau autoportant et la paroi adhérente de la poutre et débouchant d'une part sur la face supérieure du plateau autoportant et d'autre part sur un espace intérieur de la poutre. Avantageusement, la poutre est une poutre creuse ménageant un espace intérieur limité par la face adhérente et par la face libre et communiquant avec la pluralité de mortaises du **panneau** monobloc.

Avantageusement et selon l'invention, chaque mortaise est adaptée pour pouvoir recevoir et coopérer avec un tenon de fixation d'un organe de fixation - notamment d'un organe de fixation formant une chape de fixation - d'un meuble du véhicule de transport - notamment d'un siège d'aéronef -, ledit organe de fixation étant adapté pour pouvoir coopérer avec le meuble du véhicule de transport et à immobiliser celui-ci sur le plancher du véhicule de transport.

Dans un mode de réalisation particulier d'un panneau monobloc selon l'invention, chaque mortaise du **panneau** monobloc est conformée pour pouvoir recevoir un tenon de fixation, ledit tenon de fixation comprenant un organe de verrouillage conformé pour que :
- dans une première position du tenon de fixation et de l'organe de verrouillage, ledit tenon de fixation puisse être introduit librement dans la mortaise, et pour que ;
- dans une deuxième position du tenon de fixation et de l'organe de verrouillage, distincte de la première position, l'organe de verrouillage soit maintenu dans la mortaise et que l'organe de fixation du meuble du véhicule de transport soit maintenu solidaire du **panneau** monobloc.

Avantageusement et selon l'invention, les mortaises de la pluralité de mortaises sont réparties régulièrement dans le plan principal du plateau autoportant du panneau monobloc en au moins un groupe de mortaise, les mortaises de chacun des groupes de mortaise étant alignées en regard de chaque poutre. Chacune des mortaises peut présenter en section droite transversale une forme particulière, notamment une forme polygonale, une forme ovoïde ou toute autre forme à l'exception d'une forme circulaire. En particulier, chacune des mortaises peut présenter en section droite transversale une forme quadrilobée, par exemple une forme de base circulaire et présentant quatre excroissances présentant deux à deux un axe de symétrie perpendiculaire aux deux faces principales du plateau autoportant.

Par ailleurs, avantageusement et selon l'invention, le panneau monobloc comprend au moins un élément secondaire de raidissement s'étendant entre deux poutres consécutives du panneau monobloc, perpendiculairement à ceux-ci et au contact de la face inférieure du plateau autoportant - notamment en nid d'abeille -. Avantageusement, le panneau monobloc selon l'invention comprend de tels éléments secondaires de raidissement adaptés pour augmenter la résistance mécanique du panneau monobloc - notamment pour une utilisation du panneau monobloc dans laquelle le panneau monobloc supporte des meubles.

Avantageusement et selon l'invention, l'organe de fixation est conformé pour pouvoir former une liaison solidaire avec un meuble - notamment un siège - du véhicule de transport et pour pouvoir recevoir une extrémité en forme de vis du tenon de fixation et pour solidariser l'organe de fixation avec le panneau monobloc au moyen d'un écrou.

Avantageusement et en variante selon l'invention, chaque mortaise du panneau monobloc est adaptée pour pouvoir recevoir un dispositif de fixation d'un équipement sur la face supérieure du panneau monobloc, le dispositif de fixation étant caractérisé en ce qu'il comprend :
- un organe de serrage comprenant un mors, dit mors de serrage, conformé pour pouvoir traverser la mortaise et pour pouvoir prendre appui sur une face interne de la paroi adhérente s'étendant en regard de l'espace intérieur de la poutre du panneau monobloc et comprenant des moyens d'accrochage de l'équipement sur la face supérieure du panneau monobloc, et ;
- une cheville d'ancrage du dispositif de fixation dans le panneau monobloc, solidaire en rotation de l'organe de serrage et comprenant un mors, dit mors d'ancrage, adapté pour pouvoir prendre appui sur la face supérieure du panneau monobloc ;
ledit organe de serrage étant adapté pour pouvoir être déplacé en translation par rapport à la cheville d'ancrage entre :
- une position, dite position de blocage, du dispositif de fixation dans laquelle le mors de serrage et le mors d'ancrage sont rappelés en rapprochement l'un par rapport à l'autre par des moyens élastiques de rappel et élastiques et dans laquelle le mors de serrage est en contact avec la face interne de la paroi adhérente et le mors d'ancrage est en contact avec la face supérieure du panneau monobloc, et ;
- une position, dite position d'installation, du dispositif de fixation dans laquelle le mors de serrage et le mors d'ancrage sont plus éloignés l'un de l'autre par rapport à la position de blocage.

Avantageusement, dans la position d'installation, le dispositif de fixation forme un étranglement s'étendant entre le mors de serrage et le mors d'ancrage, ledit étranglement étant adapté pour permettre une rotation du dispositif de fixation par rapport au panneau monobloc.

Par ailleurs, avantageusement et selon l'invention, l'organe bi-fonctionnel comprend :
- une semelle adaptée pour pouvoir reposer sur et être solidarisée avec un élément de l'ossature structurelle du véhicule de transport, et ;
- une partie en saillie sur la semelle adaptée pour coopérer avec le tronçon creux de section droite transversale de forme polygonale à l'extrémité longitudinale de ladite poutre de façon à immobiliser sensiblement ledit panneau monobloc lorsque la partie en saillie de l'organe bi-fonctionnel coopère avec ledit tronçon creux.

Également, avantageusement, le panneau monobloc présente au moins l'une des caractéristiques suivantes :
- le panneau monobloc présente une épaisseur totale comprise entre 7 mm et 40 mm ;
- le panneau monobloc présente une plus grande dimension, dite longueur, comprise entre 1000 mm et 3000 mm et une largeur comprise entre 500 mm et 1500 mm ;
- le panneau monobloc présente une masse relative comprise entre 4 kg/m² et 20 kg/m².

L'invention s'étend par ailleurs à un plancher de véhicule de transport - notamment d'aéronef - comprenant au moins un panneau monobloc selon l'invention.

L'invention s'étend aussi à un procédé de fabrication d'un plancher de véhicule de transport dans lequel on utilise au moins un panneau monobloc selon l'invention et à un véhicule de transport équipé d'un tel panneau monobloc. Dans un tel procédé, on choisit un panneau monobloc selon l'invention et on forme le plancher du véhicule de transport par juxtaposition de panneaux monobloc sur au moins un élément de l'ossature structurelle du véhicule de transport.

L'invention s'étend aussi à l'utilisation d'un panneau monobloc selon l'invention pour la fabrication d'un plancher de véhicule de transport.

L'invention s'étend aussi à l'utilisation d'un panneau monobloc selon l'invention dans un véhicule de transport - notamment dans un aéronef -. L'invention s'étend aussi à un aéronef équipé d'un panneau monobloc selon l'invention.

L'invention concerne également un panneau monobloc, un procédé de fabrication d'un plancher de véhicule de transport comprenant un tel panneau monobloc, un plancher comprenant un tel panneau monobloc, l'utilisation d'un tel panneau monobloc et un véhicule de transport comprenant un tel panneau monobloc caractérisés en combinaison partout ou partie des caractéristiques mentionnées ci-dessus ou ci-après.

### BREVE DESCRIPTION DES FIGURES

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs, et dans lesquelles :
- la figure 1 est une vue générale en perspective d'un panneau monobloc selon l'invention,
- la figure 2 est une vue en perspective par-dessous et avec un éclaté d'un détail d'un panneau monobloc selon l'invention,
- la figure 3 est une vue en perspective par-dessus d'un détail d'un panneau monobloc selon l'invention,
- la figure 4 est une vue d'un détail d'un panneau monobloc selon l'invention en combinaison avec un organe de fixation de siège et/ou de meuble,
- la figure 5 est une vue d'un dispositif de fixation d'un équipement dans une conformation de blocage,
- la figure 6 est une vue d'un dispositif de fixation d'un équipement dans une conformation d'installation,
- la figure 7 est une vue de surface d'un panneau monobloc selon l'invention équipé d'un dispositif de fixation d'un équipement,
- la figure 8 est une vue en coupe d'un panneau monobloc dans un plan perpendiculaire au panneau monobloc et passant par une poutre, comprenant un dispositif de fixation d'un équipement en position de blocage.

### DESCRIPTION DETAILLEE

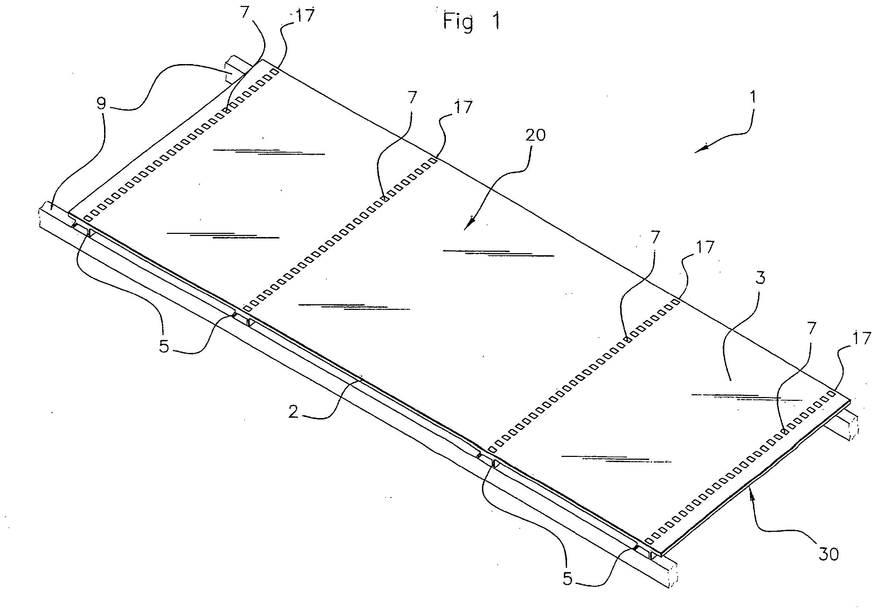

Un panneau 1 monobloc selon l'invention est représenté en figure 1 positionné sur deux traverses 9 d'ossature structurelle sensiblement parallèles d'un véhicule de transport et reposant sur celles-ci. Un tel panneau 1 monobloc comprend un plateau 2 autoportant présentant une face 30 inférieure s'étendant en regard des traverses 9 d'ossature structurelle et une face 20 supérieure opposée à la face inférieure adaptée pour permettre le cheminement d'utilisateurs et/ou d'usagers du véhicule de transport. Le plateau 2 autoportant est formé d'une âme 2 en nid d'abeille revêtue sur sa face 20 supérieure d'une peau, dite peau 3 de cabine. Dans un premier mode de réalisation non représenté de l'invention, il est possible que l'âme en nid d'abeille présente aussi sur sa face supérieure un revêtement supplémentaire de confort formé d'un tapis, d'une moquette ou de tout autre revêtement adapté pour améliorer le confort - par exemple le confort acoustique - de passagers du véhicule de transport.

Un panneau 1 monobloc selon l'invention peut également présenter, sur sa face 30 inférieure, une peau, dite peau 4 inférieure, adaptée pour améliorer la résistance mécanique en flexion du panneau 1 monobloc selon l'une de ses directions principales d'allongement. Cependant, il est possible qu'un panneau 1 monobloc ne présente pas une telle peau 4 inférieure et que les poutres 5 s'étendent directement au contact et solidaires avec la face 30 inférieure de l'âme 2 en nid d'abeille.

De telles poutres 5 sont fabriquées solidaires avec le plateau 2 autoportant. Il est possible que les poutres 5 s'étendent solidaires de l'âme 2 en nid d'abeille ou, le cas échéant, avec la peau 4 inférieure de ladite âme 2 en nid d'abeille. En tout état de cause, les poutres 5 sont réalisées de façon à être indissociables du plateau 2 autoportant sans engendrer la détérioration du panneau 1 monobloc.

La mise en place d'un panneau 1 monobloc dans un véhicule de transport ne nécessite en aucune façon le positionnement préalable de rails adaptés pour le maintien dudit panneau 1 monobloc et pour le guidage des sièges et/ou meubles équipant la cabine du véhicule de transport.

Un panneau 1 monobloc selon l'invention présente en outre des mortaises 7 traversant transversalement ledit panneau 1 monobloc et adaptées pour pouvoir coopérer avec un organe 8 de fixation d'un siège et/ou d'un meuble et pour solidariser cet organe 8 de fixation avec la face 20 supérieure du panneau 1 monobloc. Avantageusement, les mortaises 7 sont réparties dans le plan du panneau 1 monobloc de façon à former des alignements 17 de mortaises 7 adaptés pour pouvoir solidariser au moins une rangée de sièges dans le véhicule de transport. Chaque alignement 17 de mortaises 7 s'étend en regard d'une poutre 5. Dans cette configuration, les efforts exercés sur les sièges et sur les meubles sont repris directement sur les poutres 5.

Ainsi, un panneau 1 monobloc selon l'invention présente une face 20 supérieure qui est parfaitement plane et adaptée pour permettre la circulation d'utilisateurs et/ou de passagers dans le véhicule de transport.

Un tel panneau 1 monobloc selon l'invention permet d'équiper un véhicule de transport avec une pluralité de panneaux 1 monobloc selon l'invention, chaque panneau 1 de la pluralité de panneaux 1 monobloc présentant des dimensions identiques.

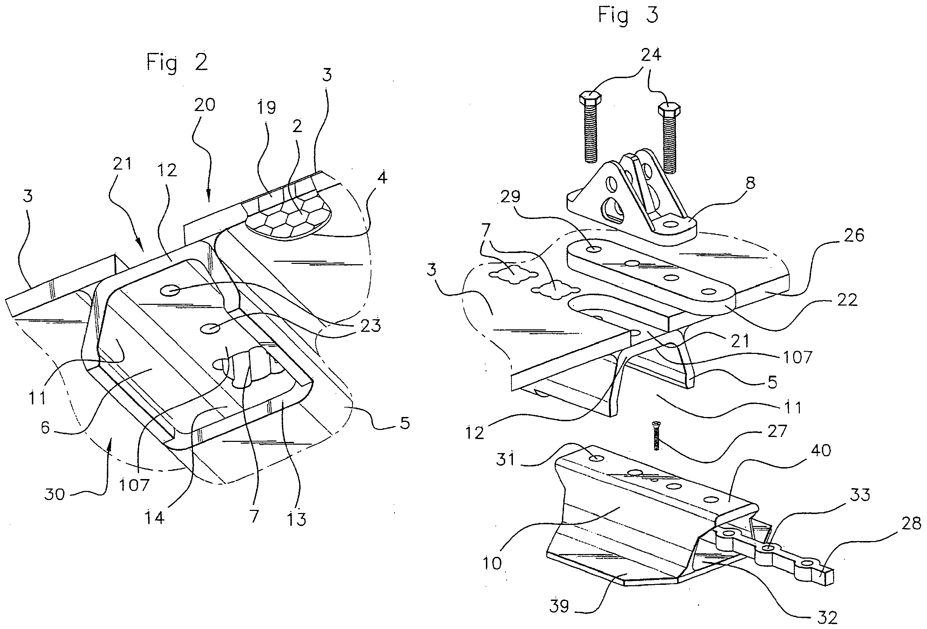

Un détail d'un panneau 1 monobloc selon l'invention vu par-dessous avec un arraché est représenté en figure 2. Le panneau 1 monobloc comprend un plateau 2 autoportant formé d'une âme 2 en nid d'abeille, une peau 3 de cabine s'étendant en surface, au contact et solidaire de la face 20 supérieure de l'âme 2 en nid d'abeille et une peau 4 inférieure s'étendant en surface, au contact et solidaire de la face 30 inférieure de l'âme 2 en nid d'abeille. L'âme 2 en nid d'abeille est d'un type connu en lui-même de l'homme du métier, c'est-à-dire présentant différentes épaisseurs selon les applications souhaitées, différentes formes de ports ou cellules 19 - notamment de section hexagonale - et différents matériaux.

Un tel panneau 1 monobloc présente une poutre 5 solidaire du plateau 2 autoportant et s'étendant au contact de la peau 4 inférieure. La poutre 5 présente un tronçon 6 creux à son extrémité longitudinale. Avantageusement, la poutre 5 est creuse sur la totalité de sa longueur. Le tronçon 6 creux de la poutre 5 présente une paroi 12 adhérente à la peau 4 inférieure du plateau 2 autoportant et une face opposée à ladite première face s'étend en regard d'un espace 14 intérieur de la poutre 5. Le tronçon 6 creux de la poutre 5 présente aussi une paroi 13 libre dont une face s'étend en regard de l'espace 14 intérieur. Les parois 12 adhérente et 13 libre définissent l'espace 14 intérieur formant un logement 11 adapté pour recevoir un organe 10 bi-fonctionnel de solidarisation de deux panneaux 1 monobloc adjacents l'un avec l'autre et de solidarisation de chacun des panneaux 1 monobloc avec une traverse 9 du véhicule de transport. Un tel tronçon 6 creux présente au moins une extrémité formée par évidement, découpe de la face 13 libre de la poutre 5.

Le panneau 1 monobloc représenté en figure 2 présente au moins une mortaise 7 adaptée pour recevoir un organe 8 de fixation d'un siège sur la face 20 supérieure du panneau 1 monobloc. Le panneau 1 monobloc présente en outre un évidement 21 adapté pour recevoir une rehausse 22 et pour noyer ladite rehausse 22 dans l'épaisseur de l'âme 2 en nid d'abeille du panneau 1 monobloc. Une telle rehausse 22 est adaptée pour pouvoir coopérer avec deux panneaux 1 monobloc adjacents et pour les solidariser avec une traverse 9 du véhicule de transport.

Le panneau 1 monobloc représenté en figure 2 présente en outre deux alésages 23 de solidarisation de la poutre 5 et du panneau 1 monobloc avec l'organe 10 bi-fonctionnel au moyen de vis 24 lorsque l'organe 10 bi-fonctionnel est engagé dans le logement 11 de la poutre 5.

Un détail d'un panneau 1 monobloc selon une première variante de l'invention, d'un organe 10 bi-fonctionnel de deux panneaux 1 monobloc adjacents et d'un organe 8 de fixation d'un siège ou d'un meuble vu par-dessus et en éclaté est représenté en figure 3. Dans cette première variante, le panneau 1 monobloc comprend une peau 3 de cabine s'étendant sur et au contact de la face 20 supérieure de l'âme 2 en nid d'abeille, une peau 4 inférieure s'étendant sous la face 30 inférieure de l'âme 2 en nid d'abeille et une poutre 5. Le panneau 1 monobloc présente un évidement 21 adapté pour pouvoir recevoir l'une des extrémités d'une rehausse 22, ladite rehausse 22 présentant deux alésages 29 complémentaires des deux alésages 23 de la poutre 5 du panneau 1 monobloc. Un tel panneau 1 monobloc présente en outre une pluralité de mortaises 7. Le tronçon 6 creux s'étendant à l'extrémité de la poutre 5 du panneau 1 monobloc est conformé pour présenter un logement 11 apte à coopérer avec l'organe 10 bi-fonctionnel formant un sabot 10.

Un tel sabot 10 présente une semelle 39 adaptée pour pouvoir reposer sur une traverse 9 du véhicule de transport et pour pouvoir être solidarisé avec cette traverse 9. Le sabot 10 comprend en outre une partie 40 en saillie conformée pour pouvoir coopérer avec le logement 11 de la poutre 5 et pour pouvoir limiter, voire empêcher, les mouvements transversaux et/ou longitudinaux du panneau 1 monobloc par rapport au sabot 10 et aux traverses 9. Pour ce faire, la partie 40 en saillie présente des alésages 31 de fixation adaptés pour recevoir les vis 24. Le sabot 10 représenté en figure 3 est équipé d'une contre plaque 28 taraudée s'étendant à l'intérieur lumière 32 du sabot 10, ladite plaque 28 taraudée formant une pluralité d'écrous 33, ladite plaque 28 taraudée étant conformée pour présenter un écrou 33 en regard de chaque alésage 31 de fixation du sabot 10. En particulier, le sabot 10 présente une vis 27 de pré-positionnement de la contre plaque 28 taraudée à l'intérieur de la lumière 32 du sabot 10. Ainsi, chaque écrou 33 de la contre plaque 28 taraudée est positionné de façon à pouvoir recevoir la vis 24 de solidarisation de l'étrier 8, de la rehausse 22, du panneau 1 monobloc et de l'organe 10 bi-fonctionnel formant le sabot 10.

Le panneau 1 monobloc, la rehausse 22 et, le cas échéant, l'organe 8 de fixation sont solidarisés, lorsque le panneau 1 monobloc est positionné et forme le plancher d'un véhicule de transport, avec l'organe 10 bi-fonctionnel au moyen des vis 24 traversant le panneau 1 monobloc, la rehausse 22 et, le cas échéant, l'organe 8 de fixation.

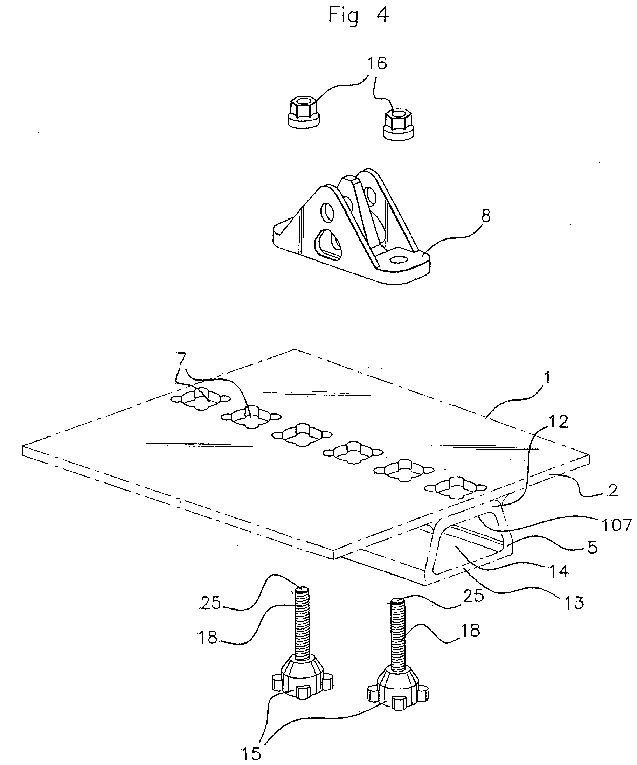

Une deuxième variante d'un panneau 1 monobloc selon l'invention équipé d'un organe 8 de fixation est représentée en figure 4. Dans cette deuxième variante, le panneau 1 monobloc présente une pluralité de mortaises 7 s'étendant à l'aplomb d'une poutre 5 du panneau 1 monobloc, lesdites mortaises 7 étant adaptées pour pouvoir recevoir et solidariser des tenons 15 de fixation de siège et/ou de meuble. Les mortaises 7 et les tenons 15 de fixation sont conformés l'un et l'autre pour que dans une première position relative des mortaises 7 et des tenons 15 de fixation, les tenons 15 de fixation puissent être engagés à l'intérieur des mortaises 7 et traverser le plateau 2 autoportant et la paroi 12 adhérente de la poutre 5 et pour que dans une deuxième position relative des mortaises 7 et des tenons 15 de fixation ceux-ci soient retenus dans les mortaises 7 et qu'un organe 8 de fixation puisse être solidarisé avec le panneau 1 monobloc au moyen des tenons 15 de fixation et d'écrous 16 adaptés pour pouvoir être vissés à l'extrémité 25 des tenons 15 de fixation.

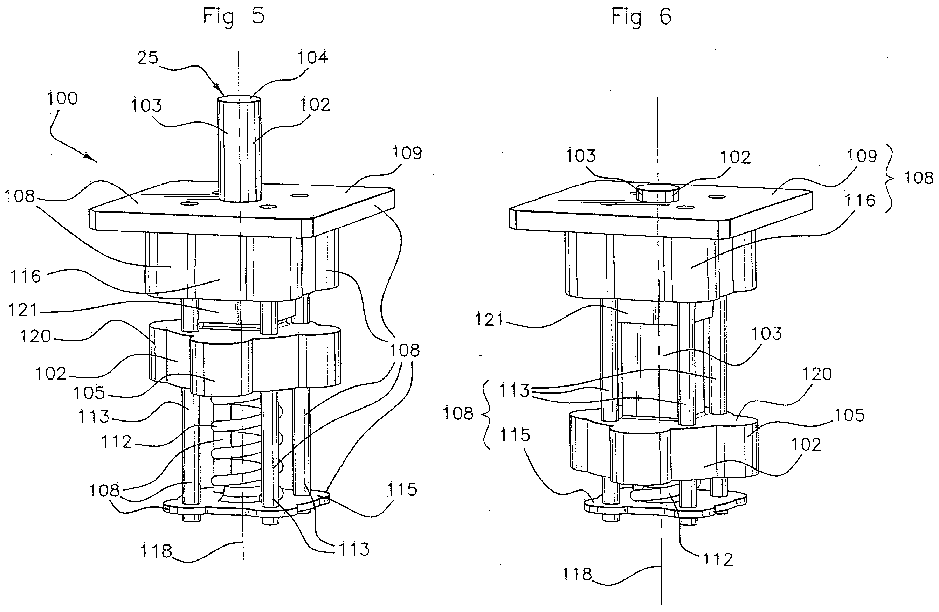

Une variante particulière d'un dispositif 100 de fixation d'un équipement sur un panneau 1 monobloc est représenté en figure 5 en position de blocage. Un tel dispositif 100 de fixation comprend un axe 118 d'allongement sensiblement parallèle à un axe perpendiculaire aux deux faces principales du panneau 1 monobloc recevant ledit dispositif 100 de fixation. Le dispositif 100 de fixation est formé d'une cheville 108 d'ancrage comprenant un mors 109 d'ancrage, une plaque 115 d'ancrage et des moyens de guidage d'un mors 105 de serrage solidaires les uns des autres, lesdits moyens de guidage étant formés de tiges 113 de guidage. Le cas échéant, la cheville 108 d'ancrage présente un détrompeur 116 adapté pour pouvoir coopérer avec les parois d'une mortaise 7 d'un panneau 1 monobloc et pour immobiliser la cheville 108 d'ancrage et le dispositif 100 de fixation en rotation sur le panneau 1 monobloc.

**La** plaque 115 d'ancrage du mors 109 d'ancrage présente au moins un orifice de préhension et d'extraction du dispositif 100 de fixation hors du panneau 1 monobloc. En particulier, de tels orifices sont conformés pour pouvoir recevoir un outil de préhension du dispositif 100 de fixation en vue de son extraction. Ainsi, un dispositif 100 de fixation selon l'invention est un dispositif 100 de fixation qui est amovible et réutilisable.

Le détrompeur 116 solidaire de la plaque 115 d'ancrage présente une lumière 117 adaptée pour recevoir et permettre le déplacement en translation de la tige 103 cylindrique.

L'organe 102 de serrage du dispositif 100 de fixation est formé d'un mors 105 de serrage de section droite transversale de forme sensiblement tétra-lobée et d'une tige 103 cylindrique s'étendant selon l'axe 118 d'allongement du dispositif 100 de fixation et solidaire du mors 105 de serrage. La tige 103 cylindrique est adaptée pour permettre un déplacement de l'organe 102 de serrage en translation par rapport à la cheville 108 d'ancrage. Dans la variante représentée en figure 5, la tige 103 cylindrique présente une section 121 droite transversale de forme carrée et la lumière 117 du détrompeur 116 présente aussi une section droite transversale de forme carrée de façon à permettre le déplacement de la tige 103 cylindrique en translation dans la lumière 117 du détrompeur 116. Dans cette variante, la tige 103 cylindrique de l'organe 102 de serrage et le détrompeur 116 solidaire de la plaque 115 d'ancrage sont solidaires en rotation l'un par rapport à l'autre.

La tige 103 cylindrique comprend une extrémité terminale adaptée pour recevoir et solidariser un équipement 101 du véhicule de transport ou un étrier 8 de fixation d'un tel équipement 101. Une telle extrémité terminale peut comprendre des moyens 104 de fixation formés d'un tronçon de tige filetée adaptée pour recevoir un écrou 16 de solidarisation.

Le dispositif 100 de fixation représenté en figure 5 comprend des moyens 112 élastiques de rappel du mors 105 de serrage et du mors 109 d'ancrage l'un vers l'autre. Dans la position de blocage du dispositif 100 de fixation représenté en figure 5 le mors 105 de serrage et le mors 109 d'ancrage exercent un effort transversal de serrage du dispositif 100 de fixation sur le panneau 1 monobloc. Dans cette position de blocage le détrompeur 116 est inséré dans la mortaise 7 du panneau 1 monobloc, le mors 109 d'ancrage étant adapté pour pouvoir s'étendre sur la surface accessible du panneau 1 monobloc et le mors 105 de serrage étant adapté pour pouvoir être en appui sur la face 107 interne de la paroi 12 adhérente de la poutre 5 et s'étendant en regard de l'espace 14 intérieur de la poutre 5 du panneau 1 monobloc par les lobes 120 du mors 105 de serrage quadrilobé.

Un dispositif 100 de fixation en position d'installation est représenté en figure 6. Un dispositif 100 de fixation en position d'installation est obtenu en exerçant un effort en compression sur l'organe 102 de serrage du dispositif 100 de fixation. Dans cette position d'installation, le mors 105 de l'organe 102 de serrage et le mors 109 d'ancrage de la cheville 108 d'ancrage sont éloignés l'un de l'autre. Dans cette position d'installation, le dispositif 100 de fixation est conformé pour que :
- le mors 105 de serrage puisse être introduit en translation dans une mortaise 7 d'un panneau 1 monobloc de façon à faire déboucher ledit mors 105 de serrage à l'extérieur du panneau 1 monobloc et sur la face aveugle de celui-ci ;
- le mors 109 d'ancrage et le détrompeur 116 du mors 109 d'ancrage s'étende à l'extérieur du panneau 1 monobloc et sur la face accessible de celui-ci, et que ;
- la cheville 108 d'ancrage et l'organe 102 de serrage solidaires en rotation puissent subir une rotation de façon à empêcher le passage du mors 105 de serrage dans la mortaise 7 du panneau 1, ledit mors 105 de serrage restant bloqué sur la face aveugle du panneau 1 monobloc et de façon à permettre un alignement du détrompeur 116 et de la mortaise 7 du panneau monobloc, ledit détrompeur 116 se déplaçant en translation dans la mortaise 7 et étant bloqué en rotation dans ladite mortaise 7.

Le relâchement de l'effort en compression exercé sur l'organe 102 de serrage permet un rappel élastique et un rapprochement du mors 105 de serrage et du mors 109 d'ancrage et la fixation du dispositif 100 de fixation par serrage sur le panneau 1 monobloc.

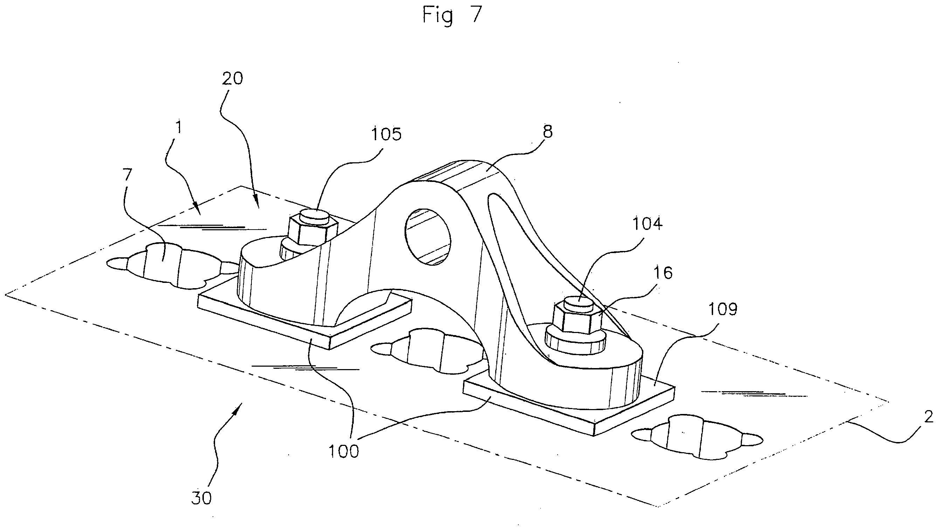

Un organe 8 de fixation d'un équipement - notamment d'un siège de cabine d'aéronef mis en place sur un panneau 1 monobloc selon l'invention est représenté en figure 7. Le panneau 1 monobloc présente un plateau 2 autoportant présentant des mortaises 7 traversant l'épaisseur dudit plateau 2 autoportant et débuchant sur les deux faces principales de celui-ci. Le panneau 1 monobloc est équipé de deux dispositifs 100 de fixation d'un équipement. Chaque dispositif 100 de fixation présente une cheville 108 d'ancrage s'étendant dans l'épaisseur du panneau 1 monobloc. La cheville 108 d'ancrage comprend un mors 109 d'ancrage s'étendant au contact de la face 20 supérieure du panneau 1 monobloc. Chaque dispositif 100 de fixation comprend en outre un organe 102 de serrage comprenant des moyens 104 d'accrochage de l'équipement et de serrage du mors de serrage sur la face inférieure du panneau 1 monobloc. Les moyens 104 d'accrochage sont adaptés pour coopérer avec un écrou 16 de fixation de l'organe 8 sur le dispositif 100 de fixation et sur la face 20 supérieure du panneau 1 monobloc.

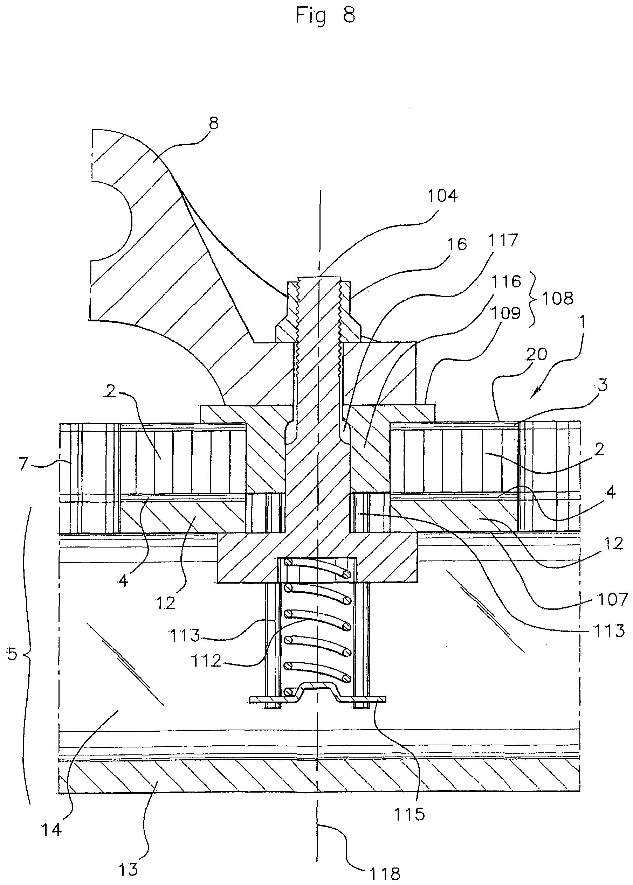

Un dispositif 100 de fixation d'un équipement avec un panneau 1 monobloc est représenté en figure 8 en position de blocage sur un panneau 1 monobloc. Le dispositif 100 de fixation comprend une cheville 108 d'ancrage comprenant un mors 109 d'ancrage, une plaque 115 d'ancrage et des tiges 113 de guidage d'un mors 105 de serrage solidaires les uns des autres. La cheville 108 d'ancrage présente en outre un détrompeur 116 solidaire du mors 109 d'ancrage adapté pour pouvoir coopérer avec les parois d'une mortaise 7 du panneau 1 monobloc et pour immobiliser la cheville 108 d'ancrage et le dispositif 100 de fixation en rotation sur le panneau 1 monobloc. Le détrompeur 116 solidaire de la plaque 115 d'ancrage présente une lumière 117 adaptée pour recevoir et permettre le déplacement en translation de la tige 103 cylindrique.

Le dispositif 100 de fixation représenté en figure 7 comprend des moyens 112 élastiques de rappel du mors 105 de serrage et du mors 109 d'ancrage l'un vers l'autre. Dans la position de blocage du dispositif 100 de fixation représenté en figure 7 le mors 105 de serrage et le mors 109 d'ancrage exercent un effort transversal de serrage du dispositif 100 de fixation sur le panneau 1 monobloc. Dans cette position de blocage le détrompeur 116 est inséré dans la mortaise 7 du panneau 1, le mors 109 d'ancrage s'étend sur la surface accessible du panneau 1 monobloc et le mors 105 de serrage est en appui sur la face interne de la paroi 12 adhérente de la poutre 5 s'étendant dans l'espace 14 intérieur par les lobes 120 du mors 105 de serrage quadrilobé.

Bien entendu, cette description est donnée à titre d'exemple illustratif uniquement et l'homme du métier pourra y apporter de nombreuses modifications, variantes et applications sans sortir de la portée de l'invention, comme par exemple faire varier le nombre de poutres et/ou les dimensions du panneau monobloc et/ou l'application à d'autres véhicules de transport.

## Revendications

1. Ensemble comprenant un panneau (1) monobloc de plancher pour véhicule de transport et un sabot bi-fonctionnel de solidarisation (10), ledit panneau (1) monobloc comprenant un plateau, dit plateau (2) autoportant, présentant une plus petite dimension, dite épaisseur, s'étendant selon une première direction du plateau (2) autoportant et deux plus grandes dimensions s'étendant selon deux directions orthogonales entre elles et orthogonales à la première direction ; le plateau (2) autoportant présentant deux faces, dites faces principales, opposées et s'étendant sensiblement parallèlement aux deux directions principales ; le panneau (1) comprenant au moins une poutre (5) solidaire du plateau (2) autoportant et présentant un axe d'allongement parallèle à au moins une première face principale du plateau (2) autoportant, chaque poutre (5) étant adaptée pour augmenter la résistance en flexion du panneau (1) monobloc selon l'axe d'allongement de la poutre (5), chaque poutre (5) présentant, à une extrémité longitudinale, un tronçon creux (6) de section droite transversale en forme de polygone présentant une paroi, dite paroi (12) adhérente, sensiblement plane et s'étendant en regard et en contact avec le plateau (2) autoportant et une paroi, dite paroi (13) libre, opposée à la paroi (12) adhérente sensiblement plane et parallèle à la paroi (12) adhérente, le tronçon creux forme évidement (11) en découpe de la paroi libre (13) pour loger ledit sabot bi-fonctionnel de solidarisation (10), ledit sabot bi-fonctionnel de solidarisation (10) comprenant une semelle (59) de solidarisation avec un élément (9) d'ossature structurelle du véhicule de transport et une partie (40) en saillie sur la semelle (59) de solidarisation adaptée pour coopérer avec le tronçon creux (6) de façon à immobiliser sensiblement le panneau (1) monobloc lorsque la partie (40) en saillie coopère avec ledit tronçon creux(6).

2. Ensemble selon la revendication 1, **caractérisé en ce que** la poutre (5) est en forme de profilé.

3. Ensemble selon l'une des revendications 1 ou 2, **caractérisé en ce que** chaque tronçon (6) creux présente en section droite transversale une forme trapézoïdale.

4. Ensemble selon l'une des revendications 1 à 3, **caractérisé en ce que** chaque tronçon (6) creux forme un logement (11) adapté pour pouvoir recevoir et coopérer avec le sabot (10) bi-fonctionnel de solidarisation de deux panneaux (1) monobloc adjacents l'un avec l'autre et de solidarisation des deux panneaux (1) monobloc adjacents avec l'élément (9) d'ossature structurelle du véhicule de transport.

5. Ensemble selon l'une des revendications 3 ou 4, **caractérisé en ce qu'**il présente une pluralité de mortaises (7) traversant le plateau (2) autoportant et la paroi (12) adhérente de la poutre (5) et débouchant d'une part sur la face (20) supérieure du plateau (2) autoportant et d'autre part sur un espace (14) intérieur de la poutre (5).

6. Ensemble selon la revendication 5, **caractérisé en ce que** les mortaises (7) de la pluralité de mortaises (7) sont réparties régulièrement dans le plan principal du plateau (2) autoportant du panneau (1) monobloc en au moins un groupe de mortaises (7), les mortaises (7) de chacun des groupes de mortaises (7) étant alignées en regard de chaque poutre (5).

7. Ensemble selon l'une des revendications 5 ou 6, **caractérisé en ce que** chaque mortaise (7) du panneau (1) monobloc est adaptée pour pouvoir recevoir un dispositif (100) de fixation d'un équipement (101) sur la face (20) supérieure du panneau (1) monobloc, ledit dispositif (100) de fixation comprenant :
- un organe (102) de serrage comprenant un mors, dit mors (105) de serrage, conformé pour pouvoir traverser la mortaise (7) et pour pouvoir prendre appui sur une face (107) interne de la paroi (12) adhérente s'étendant en regard de l'espace (14) intérieur de la poutre (5) du panneau (1) monobloc et comprenant des moyens (104) d'accrochage de l'équipement (101) sur la face (20) supérieure du panneau (1) monobloc, et ;
- une cheville (108) d'ancrage du dispositif (100) de fixation dans le panneau (1) monobloc, solidaire en rotation de l'organe (102) de serrage et comprenant un mors, dit mors (109) d'ancrage, adapté pour pouvoir prendre appui sur la face (20) supérieure du panneau (1) monobloc ;
ledit organe (102) de serrage étant adapté pour pouvoir être déplacé en translation par rapport à la cheville (108) d'ancrage entre :
- une position, dite position de blocage, du dispositif (100) de fixation dans laquelle le mors (105) de serrage et le mors (109) d'ancrage sont rappelés en rapprochement l'un par rapport à l'autre par des moyens (112) élastiques de rappel et dans laquelle le mors (105) de serrage est en contact avec la face (107) interne de la paroi (12) adhérente et le mors (109) d'ancrage est en contact avec la face (20) supérieure du panneau (1) monobloc, et ;
- une position, dite position d'installation, du dispositif (100) de fixation dans laquelle le mors (105) de serrage et le mors (109) d'ancrage sont plus éloignés l'un de l'autre par rapport à la position de blocage.

8. Utilisation d'un ensemble selon l'une des revendications 1 à 7 à titre d'élément de plancher pour véhicule de transport - notamment d'aéronef -.

9. Procédé de fabrication d'un plancher de véhicule de transport dans lequel des panneaux (1) monoblocs selon l'une des revendications 1 à 7 adjacents sont solidarisés à la fois entre eux deux par deux et à un élément (9) d'ossature structurelle du véhicule de *transport* par un sabot bi-fonctionnel (10) selon l'une des revendications 1 à 7, dont la partie en saillie (40) est adaptée pour coopérer avec les tronçons creux (6) de façon à immobiliser sensiblement les panneaux (1) monoblocs lorsque la partie (40) en saillie coopère avec lesdits tronçons creux (6) et dont la semelle (39) est adaptée pour pouvoir reposer sur et être solidarisée à l'élément d'ossature (9).

10. Procédé de fabrication selon la revendication 9, **caractérisé en ce que** chacun des panneaux adjacents (1) présente un évidement (21) adapté pour recevoir l'une des extrémités d'une rehausse (22), adaptée pour coopérer avec les panneaux adjacents (1) et pour noyer ladite rehausse (22) dans l'épaisseur du plateau (2), et **en ce que** les panneaux monoblocs (1) et la rehausse (22) sont solidarisés avec le sabot bi-fonctionnel (10)

11. Procédé de fabrication selon la revendication 10, dans lequel un étrier de fixation (8) d'un siège ou d'un meuble est également solidarisé avec la rehausse (22), les panneaux monoblocs (1), et le sabot bi-fonctionnel (10).

12. Plancher de véhicule de transport comprenant au moins un ensemble selon l'une des revendications 1 à 7, deux panneaux adjacentes étant solidarisés selon le procédé de la revendication 9, **caractérisé en ce que** les panneaux adjacents (1) présentent des alésages (23) de solidarisation de chaque poutre (5) et des panneaux (1) avec le sabot bi-fonctionnel (10), **en ce que** la partie en saillie (40) du sabot (10) présente des alésages (31), **en ce qu'**une contre-plaque (28) taraudée s'étend à l'intérieur du sabot (10) et forme une pluralité d'écrous (33), chaque écrou (33) étant en regard de chaque alésage (31), et **en ce que** les alésages de solidarisation (23) de la poutre (5), les alésages (31) de la partie en saillie (40) du sabot (10) et les écrous (33) de la contre-plaque (28) sont traversés par des vis de solidarisation (24).

13. Plancher selon la revendication 12, caractérisé en ce, les panneaux étant solidarisés selon le procédé de la revendication 10, la rehausse (22) et les poutres (5) présentent des alésages (29, 23) complémentaires traversées par les vis (24) de solidarisation.

14. Plancher selon la revendication 13, **caractérisé en ce que**, les panneaux étant respectivement solidarisés selon le procédé de la revendication 11, les vis de solidarisation (24) traversent l'étrier de fixation (8).

15. Aéronef équipé d'un ensemble selon l'une des revendications 1 à 7 compris dans le plancher selon l'une quelconque des revendications 12 à 14.

## Patentansprüche

1. Einheit, die ein einstückiges Bodenpaneel (1) für ein Transportfahrzeug und einen bifunktionellen Schuh zur festen Verbindung (10), enthält, wobei das einstückige Paneel (1) eine selbsttragende Platte (2) genannte Platte enthält, die eine kleinere Abmessung, Dicke genannt, die sich gemäß einer ersten Richtung der selbsttragenden Platte (2) erstreckt, und zwei größere Abmessungen aufweist, die sich gemäß zwei zueinander orthogonalen und zur ersten Richtung orthogonalen Richtungen erstrecken; wobei die selbsttragende Platte (2) zwei Hauptseiten genannte Seiten aufweist, die einander gegenüberliegen und sich im Wesentlichen parallel zu den zwei Hauptrichtungen erstrecken; wobei das Paneel (1) mindestens einen fest mit der selbsttragenden Platte (2) verbundenen und eine Längsachse parallel zu mindestens einer ersten Hauptseite der selbsttragenden Platte (2) aufweisenden Träger (5) enthält, wobei jeder Träger (5) geeignet ist, die Biegefestigkeit des einstückigen Paneels (1) gemäß der Längsachse des Trägers (5) zu erhöhen, wobei jeder Träger (5) an einem Längsende einen hohlen Abschnitt (6) mit einem Querschnitt in Form eines Polygons aufweist, der eine im Wesentlichen ebene und sich gegenüber und in Kontakt mit der selbsttragenden Platte (2) erstreckende haftende Wand (12) genannte Wand und eine freie Wand (13) genannte Wand aufweist, die der im Wesentlichen ebenen haftenden Wand (12) gegenüberliegt und parallel zur haftenden Wand (12) ist, wobei der hohle Abschnitt eine aus der freien Wand (13) ausgeschnittene Aussparung (11) formt, um den bifunktionellen Schuh zur festen Verbindung (10) aufzunehmen, wobei der bifunktionelle Schuh zur festen Verbindung (10) eine Sohle (59) zur festen Verbindung mit einem Element (9) eines strukturellen Gerippes des Transportfahrzeugs und einen auf der Sohle (59) zur festen Verbindung vorstehenden Teil (40) enthält, der geeignet ist, mit dem hohlen Abschnitt (6) zusammenzuwirken, um das einstückige Paneel (1) im Wesentlichen zu fixieren, wenn der vorstehende Teil (40) mit dem hohlen Abschnitt (6) zusammenwirkt.

2. Einheit nach Anspruch 1, **dadurch gekennzeichnet, dass** der Träger (5) die Form eines Profilteils hat.

3. Einheit nach einem der Ansprüche 1 oder 2, **dadurch gekennzeichnet, dass** jeder hohle Abschnitt (6) im Querschnitt eine Trapezform aufweist.

4. Einheit nach einem der Ansprüche 1 bis 3, **dadurch gekennzeichnet, dass** jeder hohle Abschnitt (6) eine Aufnahme (11) formt, die geeignet ist, den bifunktionellen Schuh (10) zur festen Verbindung von zwei benachbarten einstückigen Paneelen (1) aneinander und zur festen Verbindung der zwei benachbarten einstückigen Paneele (1) mit dem strukturellen Gerippeelement (9) des Transportfahrzeugs aufnehmen und mit ihm zusammenwirken zu können.

5. Einheit nach einem der Ansprüche 3 oder 4, **dadurch gekennzeichnet, dass** sie eine Vielzahl von Zapfenlöchern (7) aufweist, die die selbsttragende Platte (2) und die haftende Wand (12) des Trägers (5) durchqueren und einerseits an der Oberseite (20) der selbsttragenden Platte (2) und andererseits an einem Innenraum (14) des Trägers (5) münden.

6. Einheit nach Anspruch 5, **dadurch gekennzeichnet, dass** die Zapfenlöcher (7) der Vielzahl von Zapfenlöchern (7) gleichmäßig in der Hauptebene der selbsttragenden Platte (2) des einstückigen Paneels (1) in mindestens einer Gruppe von Zapfenlöchern (7) verteilt sind, wobei die Zapfenlöcher (7) jeder der Gruppen von Zapfenlöchern (7) gegenüber jedem Träger (5) ausgerichtet sind.

7. Einheit nach einem der Ansprüche 5 oder 6, **dadurch gekennzeichnet, dass** jedes Zapfenloch (7) des einstückigen Paneels (1) geeignet ist, eine Befestigungsvorrichtung (100) einer Ausrüstung (101) an der Oberseite (20) des einstückigen Paneels (1) aufnehmen zu können, wobei die Befestigungsvorrichtung (100) enthält:
- ein Spannorgan (102), das eine Spannbacke (105) genannte Backe enthält, die gestaltet ist, um das Zapfenloch (7) durchqueren zu können und um auf einer Innenseite (107) der haftenden Wand (12) aufliegen zu können, die sich gegenüber dem Innenraum (14) des Trägers (5) des einstückigen Paneels (1) erstreckt, und Einrichtungen (104) zum Befestigen der Ausrüstung (101) an der Oberseite (20) des einstückigen Paneels (1) enthält, und
- einen Verankerungsdübel (108) der Befestigungsvorrichtung (100) im einstückigen Paneel (1), der in Drehung fest mit dem Spannorgan (102) verbunden ist und eine Verankerungsbacke (109) genannte Backe enthält, die geeignet ist, auf der Oberseite (20) des einstückigen Paneels (1) aufliegen zu können;
wobei das Spannorgan (102) geeignet ist, bezüglich des Verankerungsdübels (108) translatorisch verschoben werden zu können zwischen:
- einer Blockierstellung genannten Stellung der Befestigungsvorrichtung (100), in der die Spannbacke (105) und die Verankerungsbacke (109) durch elastische Rückstelleinrichtungen (112) in Annäherung zueinander zurückgestellt werden und in der die Spannbacke (105) mit der Innenseite (107) der haftenden Wand (12) in Kontakt ist und die Verankerungsbacke (109) mit der Oberseite (20) des einstückigen Paneels (1) in Kontakt ist, und
- einer Einbaustellung genannten Stellung der Befestigungsvorrichtung (100), in der die Spannbacke (105) und die Verankerungsbacke (109) bezüglich der Blockierstellung weiter voneinander entfernt sind.

8. Verwendung einer Einheit nach einem der Ansprüche 1 bis 7 als Bodenelement für ein Transportfahrzeug - insbesondere eines Luftfahrzeugs -.

9. Herstellungsverfahren eines Bodens eines Transportfahrzeugs, bei dem benachbarte einstückige Paneele (1) nach einem der Ansprüche 1 bis 7 jeweils paarweise miteinander und mit einem strukturellen Gerippeelement (9) des Transportfahrzeugs durch einen bifunktionellen Schuh (10) nach einem der Ansprüche 1 bis 7 fest verbunden werden, dessen vorstehender Teil (40) geeignet ist, mit den hohlen Abschnitten (6) zusammenzuwirken, um die einstückigen Paneele (1) im Wesentlichen zu fixieren, wenn der vorstehende Teil (40) mit den hohlen Abschnitten (6) zusammenwirkt, und dessen Sohle (39) geeignet ist, auf dem Gerippeelement (9) ruhen und fest mit ihm verbunden werden zu können.

10. Herstellungsverfahren nach Anspruch 9, **dadurch gekennzeichnet, dass** jedes der benachbarten Paneele (1) eine Aussparung (21) aufweist, die geeignet ist, eines der Enden eines Aufsatzes (22) aufzunehmen, der geeignet ist, mit den benachbarten Paneelen (1) zusammenzuwirken, und um den Aufsatz (22) in der Dicke der Platte (2) zu versenken, und dass die einstückigen Paneele (1) und der Aufsatz (22) fest mit dem bifunktionellen Schuh (10) verbunden werden.

11. Herstellungsverfahren nach Anspruch 10, wobei ein Befestigungsbügel (8) eines Sitzes oder eines Möbels ebenfalls fest mit dem Aufsatz (22), den einstückigen Paneelen (1) und dem bifunktionellen Schuh (10) verbunden ist.

12. Boden eines Transportfahrzeugs, der mindestens eine Einheit nach einem der Ansprüche 1 bis 7 enthält, wobei zwei benachbarte Paneele gemäß dem Verfahren des Anspruchs 9 fest miteinander verbunden sind, **dadurch gekennzeichnet, dass** die benachbarten Paneele (1) Bohrungen (23) zur festen Verbindung jedes Trägers (5) und der Paneele (1) mit dem bifunktionellen Schuh (10) aufweisen, dass der vorstehende Teil (40) des Schuhs (10) Bohrungen (31) aufweist, dass eine mit Innengewinde versehene Gegenplatte (28) sich im Inneren des Schuhs (10) erstreckt und eine Vielzahl von Muttern (33) formt, wobei jede Mutter (33) sich gegenüber jeder Bohrung (31) befindet, und dass die Bohrungen zur festen Verbindung (23) des Trägers (5), die Bohrungen (31) des vorstehenden Teils (40) des Schuhs (10) und die Muttern (33) der Gegenplatte (28) von Schrauben zur festen Verbindung (24) durchquert werden.

13. Boden nach Anspruch 12, **dadurch gekennzeichnet, dass**, da die Paneele gemäß dem Verfahren des Anspruchs 10 fest verbunden sind, der Aufsatz (22) und die Träger (5) komplementäre Bohrungen (29, 23) aufweisen, die von den Schrauben zur festen Verbindung (24) durchquert werden.

14. Boden nach Anspruch 13, **dadurch gekennzeichnet, dass**, da die Paneele je gemäß dem Verfahren nach Anspruch 11 fest verbunden sind, die Schrauben zur festen Verbindung (24) den Befestigungsbügel (8) durchqueren.

15. Luftfahrzeug, das mit einer Einheit nach einem der Ansprüche 1 bis 7 ausgestattet ist, die in dem Boden nach einem der Ansprüche 12 bis 14 enthalten ist.

## Claims

1. Assembly comprising a unitary floor panel (1) for a transport vehicle and a dual-function securing saddle (10), said unitary panel (1) comprising a plate, termed self-supporting plate (2), having a smaller dimension, termed thickness, extending in a first direction of the self-supporting plate (2), and two larger dimensions extending in two directions that are mutually orthogonal and are orthogonal to the first direction; the self-supporting plate (2) having two faces, termed principal faces, that are opposite and extend essentially parallel to the two principal directions; the panel (1) comprising at least one beam (5) that is secured to the self-supporting plate (2) and has a longitudinal axis parallel to at least one first principal face of the self-supporting plate (2), each beam (5) being designed to increase the bending strength of the unitary panel (1) in the longitudinal axis of the beam (5), each beam (5) having, at a longitudinal end, a hollow segment (6) having a transverse cross section that is in the shape of a polygon having a wall, termed adhering wall (12), that is essentially planar and extends facing and in contact with the self-supporting plate (2), and a wall, termed free wall (13), that is opposite the essentially planar adhering wall (12) and parallel to the adhering wall (12), the hollow segment forms a cavity (11) cut away from the free wall (13) for accommodating said dual-function securing saddle (10), said dual-function securing saddle (10) comprising a sole (59) for securing to an element (9) of the structural framework of the transport vehicle and a projecting portion (40) on the securing sole (59), that is designed to cooperate with the hollow segment (6) so as to essentially immobilize the unitary panel (1) when the projecting portion (40) cooperates with said hollow segment (6).

2. Assembly according to Claim 1, **characterized in that** the beam (5) is in the form of a profile.

3. Assembly according to either of Claims 1 and 2, **characterized in that** each hollow segment (6) has, in transverse cross section, a trapezoidal shape.

4. Assembly according to one of Claims 1 to 3, **characterized in that** each hollow segment (6) forms a recess (11) designed to be able to receive and cooperate with the dual-function saddle (10) for securing to one another two adjacent unitary panels (1) and for securing the two adjacent unitary panels (1) to the structural framework element (9) of the transport vehicle.

5. Assembly according to either of Claims 3 and 4, **characterized in that** it has a plurality of mortises (7) passing through the self-supporting plate (2) and the adhering wall (12) of the beam (5), and opening on the one hand onto the upper face (20) of the self-supporting plate (2) and on the other hand onto an internal space (14) of the beam (5).

6. Assembly according to Claim 5, **characterized in that** the mortises (7) of the plurality of mortises (7) are regularly distributed in the principal plane of the self-supporting plate (2) of the unitary panel (1), in at least one group of mortises (7), the mortises (7) of each one of the groups of mortises (7) being aligned facing each beam (5).

7. Assembly according to either of Claims 5 and 6, **characterized in that** each mortise (7) of the unitary panel (1) is designed to be able to receive a device (100) for fastening an item of equipment (101) to the upper face (20) of the unitary panel (1), said fastening device (100) comprising:
- a gripping member (102) comprising a jaw, termed gripping jaw (105), which is shaped so as to be able to pass through the mortise (7) and to be able to bear against an internal face (107) of the adhering wall (12) extending facing the internal space (14) of the beam (5) of the unitary panel (1) and comprising means (104) for attaching the item of equipment (101) to the upper face (20) of the unitary panel (1), and;
- an anchoring peg (108) of the device (100) for fastening in the unitary panel (1), rotating as one with the gripping member (102) and comprising a jaw, termed anchoring jaw (109), designed to be able to bear against the upper face (20) of the unitary panel (1);
said gripping member (102) being designed to be movable in translation relative to the anchoring peg (108), between:
- a position, termed blocking position, of the fastening device (100) in which the gripping jaw (105) and the anchoring jaw (109) are returned towards one another by elastic return means (112) and in which the gripping jaw (105) is in contact with the internal face (107) of the adhering wall (12) and the anchoring jaw (109) is in contact with the upper face (20) of the unitary panel (1), and;
- a position, termed installation position, of the fastening device (100) in which the gripping jaw (105) and the anchoring jaw (109) are further apart from one another than in the blocking position.

8. Use of an assembly according to one of Claims 1 to 7 as a floor element for a transport vehicle, in particular an aircraft.

9. Method for producing a floor of a transport vehicle in which adjacent unitary panels (1) according to one of Claims 1 to 7 are secured both to one another in pairs and to a structural framework element (9) of the transport vehicle by a dual-function saddle (10) according to one of Claims 1 to 7, of which the projecting portion (40) is designed to cooperate with the hollow segments (6) so as to essentially immobilize the unitary panels (1) when the projecting portion (40) cooperates with said hollow segments (6), and of which the sole (39) is designed to be able to rest against and be secured to the framework element (9).

10. Production method according to Claim 9, **characterized in that** each one of the adjacent panels (1) has a cavity (21) designed to receive one of the ends of a riser block (22) that is designed to cooperate with the adjacent panels (1), and to embed said riser block (22) in the thickness of the plate (2), and **in that** the unitary panels (1) and the riser block (22) are secured with the dual-function saddle (10).

11. Production method according to Claim 10, wherein a fastening yoke joint (8) for a seat or a furniture item is also secured with the riser block (22), the unitary panels (1) and the dual-function saddle (10).

12. Floor of a transport vehicle comprising at least one assembly according to one of Claims 1 to 7, two adjacent panels being secured according to the method of Claim 9, **characterized in that** the adjacent panels (1) have bores (23) for securing each beam (5) and the panels (1) with the dual-function saddle (10), and **in that** the projecting portion (40) of the saddle (10) has bores (31), **in that** a tapped counter-plate (28) extends inside the saddle (10) and forms a plurality of nuts (33) each nut (33) facing each bore (31), and **in that** the securing bores (23) of the beam (5), the bores (31) of the projecting portion (40) of the saddle (10) and the nuts (33) of the counter-plate (28) have securing screws (24) passing through them.

13. Floor according to Claim 12, **characterized in that**, the panels being secured according to the method of Claim 10, the riser block (22) and the beams (5) have complementary bores (29, 23) that have securing screws (24) passing through them.

14. Floor according to Claim 13, **characterized in that**, the panels being respectively secured according to the method of Claim 11, the securing screws (24) pass through the fastening yoke joint (8).

15. Aircraft equipped with an assembly according to one of Claims 1 to 7 comprised in the floor according to any one of Claims 12 to 14.
